# EUROPEAN PATENT SPECIFICATION

(11) **EP 3 886 758 B1**
(45) Date of publication and mention of the grant of the patent: **17.09.2025**
(21) Application number: 19888778.8
(22) Date of filing: 29.11.2019
(51) Int. Cl.: A61C 15/00, A61C 15/04

(54) **FLOSSING TOOL**
ZAHNSEIDEWERKZEUG
OUTIL FIL DENTAIRE

(30) Priority: 29.11.2018 US 201862772783 P; 07.02.2019 US 201962802216 P; 05.03.2019 US 201962814102 P; 22.10.2019 US 201962924598 P
(43) Date of publication of application: 06.10.2021
(73) Proprietor: Andersen, Leonhardt, Erie, PA 16507 (US); Morosky, William, Erie, PA 16506 (US)
(72) Inventor: Andersen, Leonhardt, Erie, PA 16507 (US); Morosky, William, Erie, PA 16506 (US)
(74) Representative: Diehl & Partner
(86) International application number: PCT/US2019/063870
(87) International publication number: WO 2020/113177

(56) References cited:
- EP-A2- 1 449 495
- WO-A1-01/12100
- WO-A2-2006/056978
- DE-A1- 2 923 057
- DE-U1- 202007 011 664
- DE-U1- 9 406 237
- FR-A- 635 201
- JP-U- H0 722 714
- KR-A- 20130 137 796
- TW-U- M 459 843
- US-A- 4 404 978
- US-A- 4 671 307
- US-A- 4 982 752
- US-A- 5 197 498
- US-A- 5 438 726
- US-A- 5 819 769
- US-A- 6 006 762
- US-A1- 2003 106 565
- US-A1- 2005 092 346
- US-A1- 2009 165 814
- US-A1- 2014 196 743

## Description

### TECHNICAL FIELD

The present invention relates to a flossing tool, in particular an adjustable flossing tool.

### BACKGROUND

Flossing tools are used to enable users to more easily and effectively floss to remove food particles and plaque from between teeth and gums. However, prior flossing tools are limited in their utility in that they do not allow for toe accommodation of different or variable flossing angles.

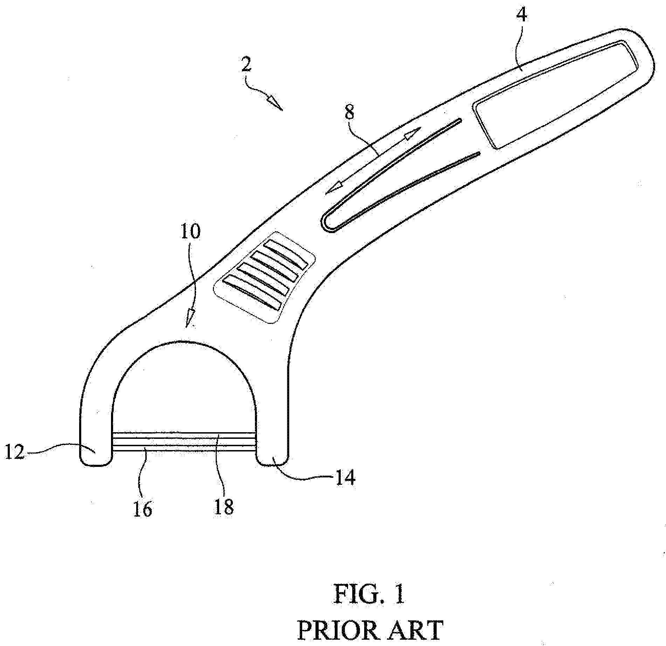

Referring to toe drawings, FIG. 1 depicts a flossing tool 2 of the prior art having a handle or tool body 4 defining a major tool axis 8 and a first distal end 10. A first arm 12 and a second aim 14 extend from toe first distal end 10. A first floss string 16 and a second floss string 18 extend between the first and second arms 12 and 14 for the flossing function. Although positioned at an angle from the major tool axis 8, the floss strings 16 and 18 cannot be adjusted from this angle relative to the major tool axis 8. As a result, the tool 2 may not allow for optimum flossing positioning for all teeth or flossing circumstances.

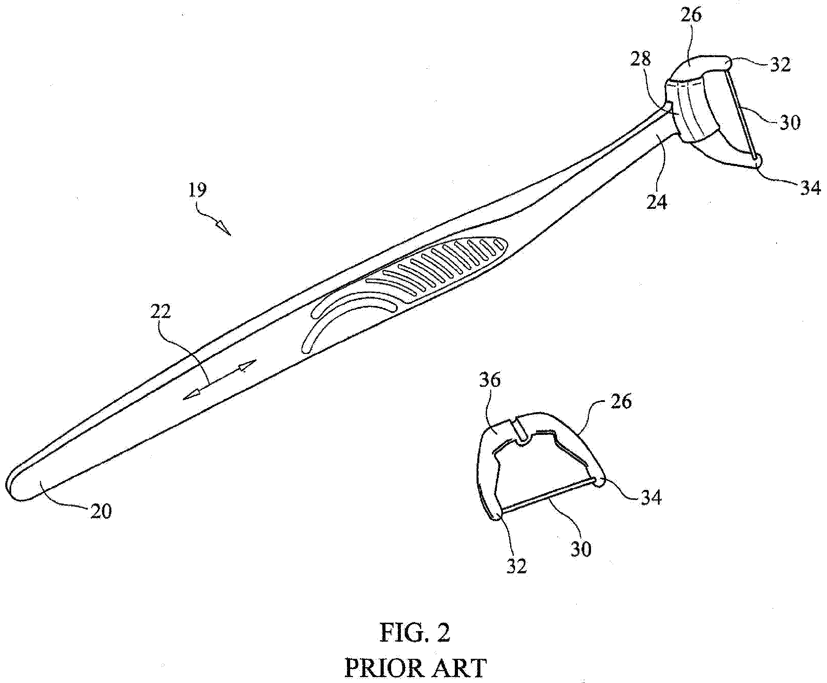

FIG. 2 depicts a flossing tool 19 of the prior art also having a handle or tool body 20 defining a major tool axis 22 and a first distal end 24 having a headstock 28. The headstock 28 includes a female locking keyslot (not shown in FIG. 2) allowing for the locking engagement of a removable string positioner 26 (shown both attached to the headstock 28 of the flossing tool 19 and removed therefrom in FIG. 2) with a male key segment 36. However, when the string positioner 26 is attached to the flossing tool 19, the first positioner arm 32 and second positioner arm 34 orient the single floss string 30 at a locked, roughly perpendicular position relative to the major tool axis 22. Thus, while the string positioner 26 is attached to the flossing tool 19 and in this locked position, no further adjustment of the position of the string 36 relative the major tool axis 22 is possible to optimize flossing.
Document US 4 671 307 discloses a dental floss holder comprising a first floss holding head at one end of the handle and a second floss holding head at the other end of the handle. One of the heads is angularly adjustable and H-shaped, the other is C-shaped.
WO 2006/056978 A2 discloses an adjustable flossing tool comprising:a tool body having a longitudinal tool axis, said tool body having a distal tool end and a headstock positioned at or near said distal tool end;a first string positioner positioned on said flossing tool, each said first string positioner having a first positioner arm and a second positioner arm, said first string positioner being positioned on said headstock; said first string positioner having at least one first floss string positioned to extend from said first positioner arm to said second positioner arm;said headstock allowing at least one of said first string positioner to position a said floss string at a first string position in parallel to or at an angle to said longitudinal tool axis,said headstock allowing for tool adjustment to allow at least one of said first string positioner to position a said floss string at a second string position in parallel to or at an angle to said longitudinal tool axis; and said first string position being relative to said longitudinal tool axis, further comprising a rotatable locking pivot, said locking pivot attaching both said first string positioner to said headstock, said locking pivot allowing at least one of said first string positioner to rotate and position at least one of said floss strings in said first string position, said locking pivot allowing for tool adjustment by allowing at least one of said first string positioner to rotate and position at least one of said floss strings in said second string position.

### SUMMARY OF THE INVENTION

An adjustable flossing tool according to claim 1 comprises a tool body having a major (*i.e.,* longitudinal) tool axis, the tool body having a first distal tool end and a headstock positioned at or near the first distal tool end. At least two string positioners each having first and second positioner arms are positioned on the headstock via a rotatable locking pivot. One or more floss strings are positioned to extend between the first and second positioner arms of each string positioner.

The headstock allows the at least two string positioners to position a respective floss string in a first string position in parallel to or at an angle to the major tool axis. The headstock along with its rotatable locking pivot allows for tool adjustment, allowing at least one of the string positioners to position its floss string in a second string position in parallel
to or at an angle to the major tool axis, the second string position being a different position than the first string position relative to the major tool axis.

In embodiments having two or more string positioners, at least one of the string positioners is positioned on the headstock. The string positioners may allow the floss strings to be positioned at 90 degrees to each other or at other angles relative to each other and/or to the major tool axis. The string positioners may be adjustable in their angles with respect to the major tool axis either by being removable and replaceable or by attached adjustment such as by rotation about either a shared or separate axes or pivots.

### BRIEF DESCRIPTION OF THE DRAWINGS

For a more complete understanding and appreciation of this invention, and its many advantages, reference will be made to the following Detailed Description taken in conjunction with the accompanying drawings.
FIG. 1 depicts a flossing tool of the prior art;
FIG. 2 depicts a flossing tool of the prior art;
FIG. 3A depicts a perspective view of a flossing tool;
FIG. 3B depicts a top view of the flossing tool of FIG. 3A;
FIG. 4 depicts a closeup top perspective view of the flossing tool of FIG. 3A;
FIG. 4A depicts a front view of a floss positioner;
FIG. 4B depicts a side view of the floss positioner of FIG. 4A;
FIG. 5 depicts a closeup bottom perspective view of the flossing tool of FIG. 3A;
FIG. 6A depicts a top perspective view of a flossing tool;
FIG. 6B depicts a bottom perspective view of a flossing tool;
FIG. 6C depicts a perspective view of the floss positioner of FIG 6A;
FIG. 6D depicts a perspective view of the floss positioner of FIG. 6B;
FIG. 6E depicts a perspective view of a floss positioner;
FIG. 6F depicts a perspective view of a floss positioner;
FIG. 6G depicts a top perspective view of a flossing tool;
FIG. 6H depicts a top view of a flossing tool;
FIG. 7A depicts a closeup top perspective view of a flossing tool according to one embodiment of the invention;
FIG. 7B depicts a closeup top perspective view of the flossing tool of FIG. 7A;
FIG. 8 depicts a closeup top perspective view of a flossing tool;
FIG. 9 depicts a closeup top perspective view of a flossing tool;
FIG. 10A depicts a closeup top perspective view of a flossing tool;
FIG. 10B depicts a closeup bottom perspective view of a flossing tool;
FIG. 11A depicts string positioner and string arrangement;
FIG. 11B depicts string positioner and string arrangement according to one embodiment of the invention;
FIG. 11C depicts string positioner and string arrangement according to one embodiment of the invention;
FIG. 11D depicts string positioner and string arrangement according to one embodiment of the invention;
FIG. 11E depicts string positioner and string arrangement according to one embodiment of the invention;
FIG. 11F depicts string positioner and string arrangement;
FIG. 11G depicts string positioner and string arrangement according to one embodiment of the invention;
FIG. 11H depicts string positioner and string arrangement according to one embodiment of the invention;

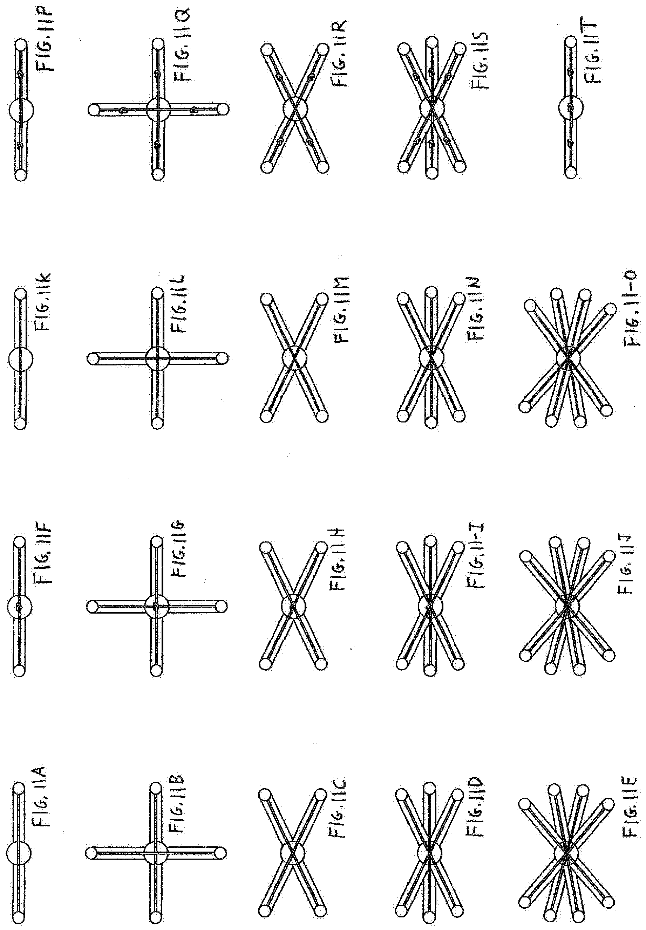

FIG. 11-I depicts string positioner and string arrangement according to one embodiment of the invention;
FIG. 11J depicts string positioner and string arrangement according to one embodiment of the invention;
FIG. 11K depicts string positioner and string arrangement;
FIG. 11L depicts string positioner and string arrangement according to one embodiment of the invention;
FIG. 11M depicts string positioner and string arrangement according to one embodiment of the invention;
FIG. 11N depicts string positioner and string arrangement according to one embodiment of the invention;
FIG. 11-O depicts string positioner and string arrangement according to one embodiment of the invention;
FIG. 11P depicts string positioner and string arrangement;
FIG. 11Q depicts string positioner and string arrangement according to one embodiment of the invention;
FIG. 11R depicts string positioner and string arrangement according to one embodiment of the invention;
FIG. 11S depicts string positioner and string arrangement according to one embodiment of the invention;
FIG. 11T depicts string positioner and string arrangement according to one embodiment of the invention;

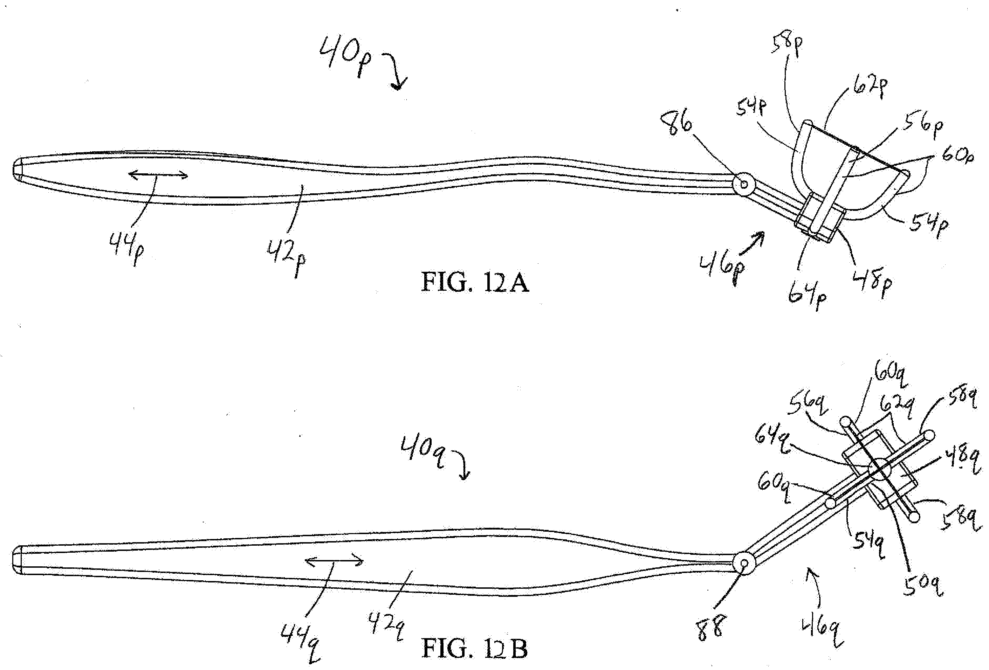

FIG. 12A depicts a side view of a flossing tool according to one embodiment of the invention;
FIG. 12B depicts a top view of a flossing tool according to one embodiment of the invention;

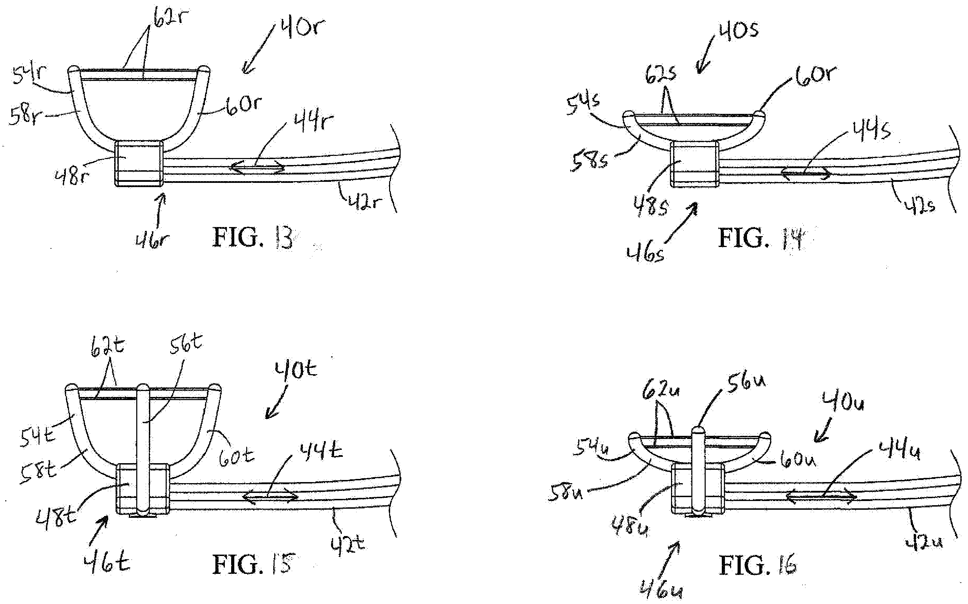

FIG. 13 depicts a closeup side view of a flossing tool;
FIG. 14 depicts a closeup side view of a flossing tool;
FIG. 15 depicts a closeup side view of a flossing tool;
FIG. 16 depicts a closeup side view of a flossing tool;

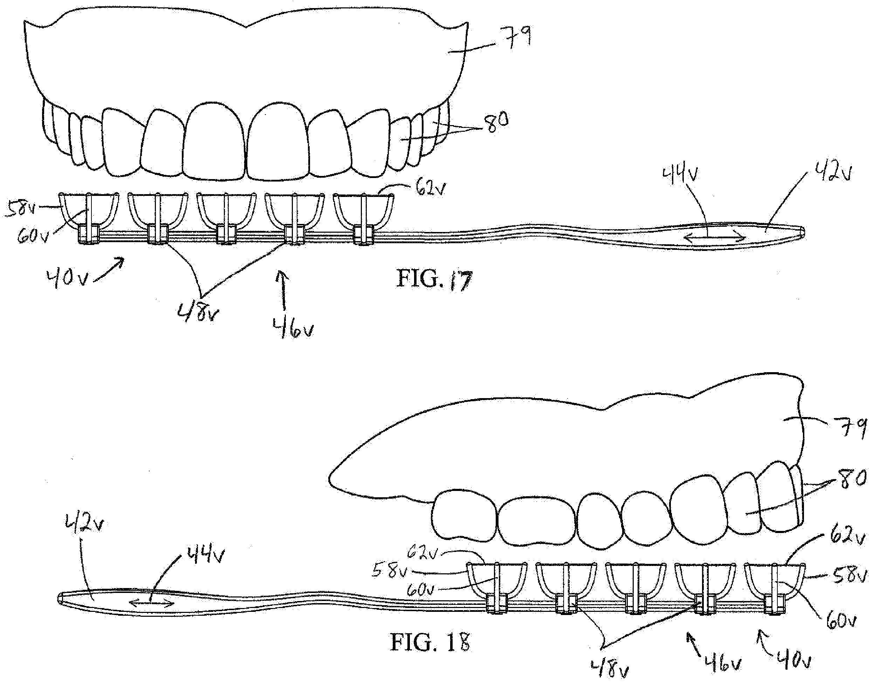

FIG. 17 depicts a side view of a flossing tool according to one embodiment of the invention positioned to floss a user's teeth and gums;
FIG. 18 depicts a side view of a flossing tool according to one embodiment of the invention positioned to floss a user's teeth and gums;

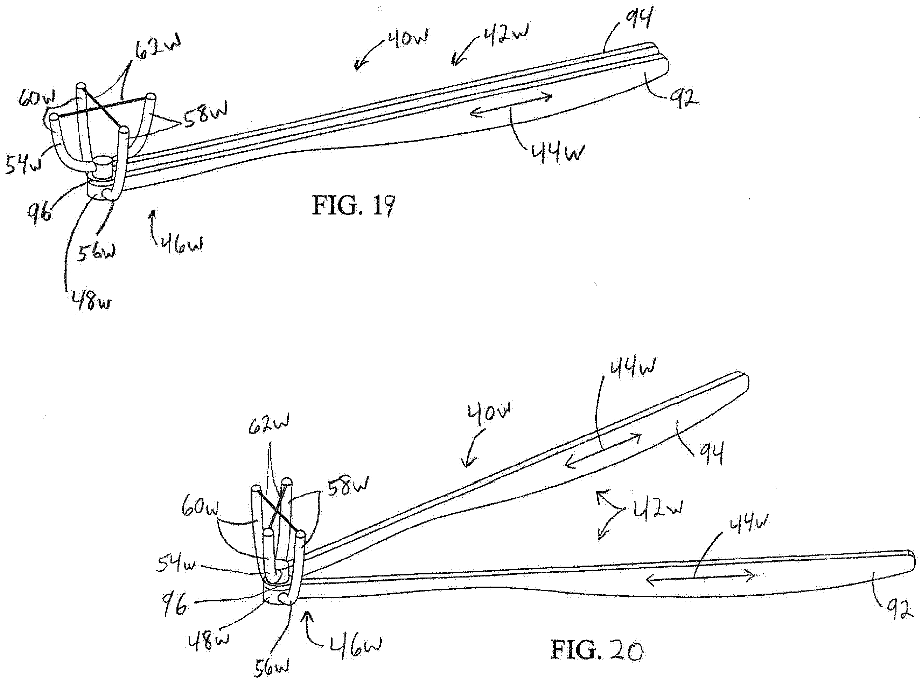

FIG. 19 depicts a top perspective view of a flossing tool according to one embodiment of the invention;
FIG. 20 depicts a top perspective view of the flossing tool of FIG. 19;

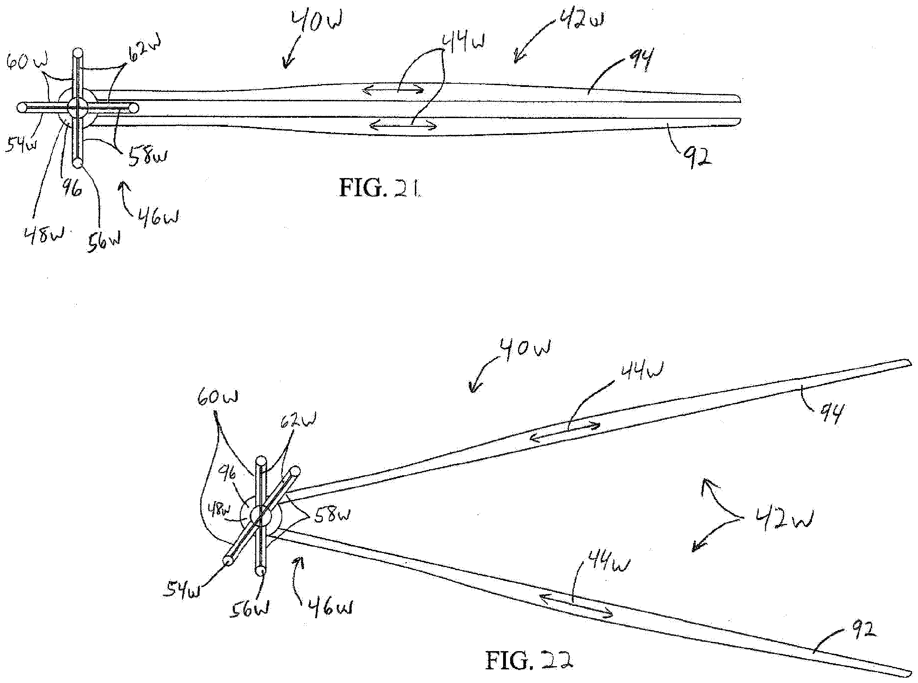

FIG. 21 depicts a top view of the flossing tool of FIG. 19;
FIG. 22 depicts a top view of the flossing tool of FIG. 19;

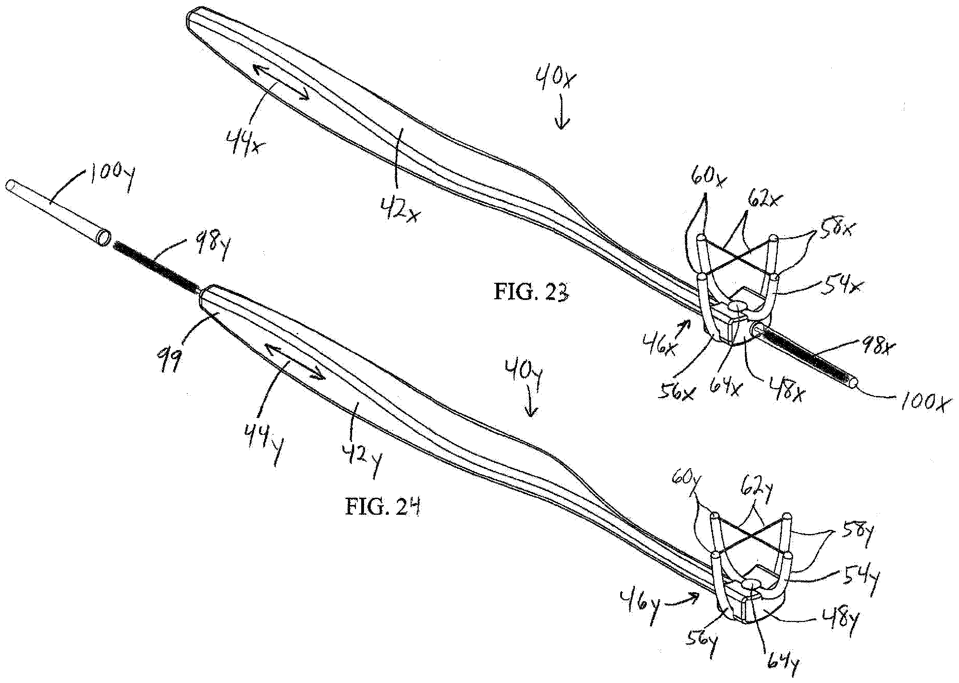

FIG. 23 depicts a top perspective view of a flossing tool according to one embodiment of the invention; and
FIG. 24 depicts a perspective view of a flossing tool according to one embodiment of the invention.

### DETAILED DESCRIPTION OF THE INVENTION

Referring to the drawings, similar reference numerals are used to designate the same or corresponding parts throughout the several embodiments and figures. In some drawings, some specific embodiment variations in corresponding parts are denoted with the addition of lower case letters to reference numerals.

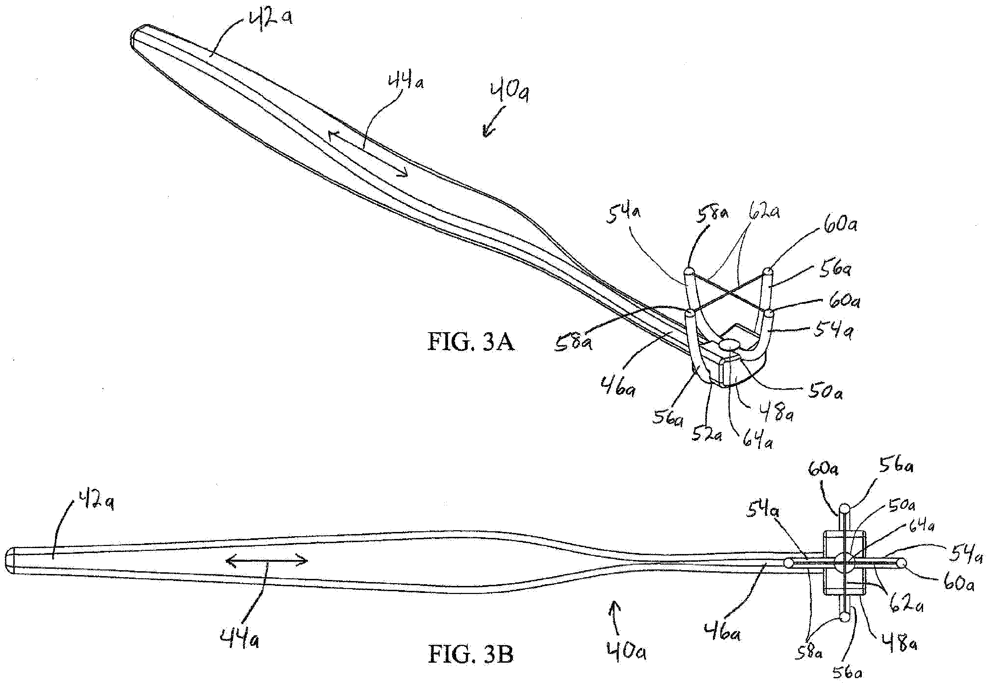

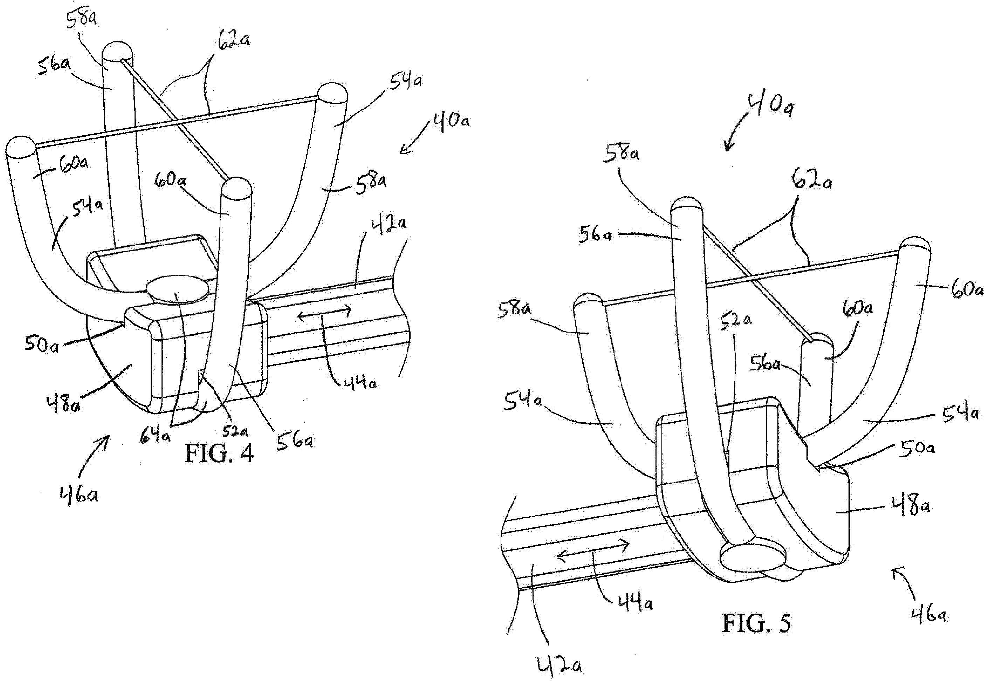

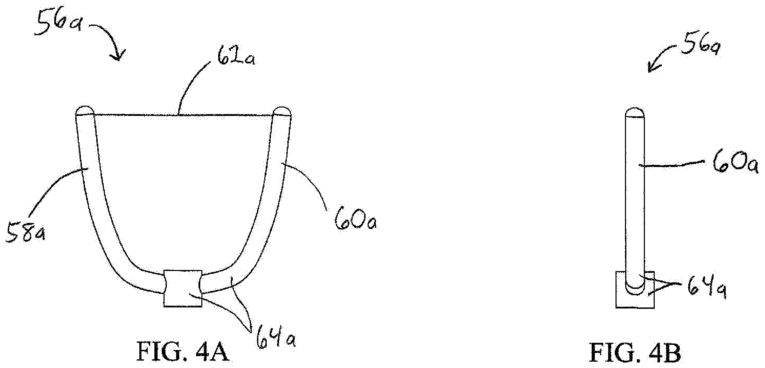

FIGS. 3A and 3B depict a flossing tool **40a** having a handle or tool body **42a** defining a major tools axis **44a** and a first distal end **46a.** The tool body **42a** has a headstock **48a** positioned at the first distal end **46a.** Comparing FIGS. 3A and B with the close up perspective view of the first distal end **46a** in FIG. 4, the headstock **48a** includes a forward female positioning slot **50a** and a back female positioning slot **52a.** A first string positioner **54a** and second string positioner **56a** are positioned on the headstock **48a,** each including a first positioner arm **58a** and second positioner arm **60a** and a floss string **62a**

With brief reference to the front view of the second string positioner **56a** in FIG. 4A and the side view of the same second string positioner **56a** in FIG. 4B, the floss string **62a** extends from the first positioner arm **58a** to the second positioner arm **60a.** Male keying **64a** is shaped into the second string positioner **56a** at the location of connection between the first positioner arm **58a** and second positioner arm **60a.**

As best understood by comparing FIGS. 4A and 4B with FIGS. 4 and 5, the male keying **64a** of the second string positioner **56a** allows for lockable positioning of the second string positioner **56a** within the back female positioning slot **52a** of the headstock **48a.** Similarly, the male keying **64a** of the first string positioner **54a** allows for lockable positioning of the first string positioner **54a** within the forward female positioning slot **50a** of the headstock **48a.** This configuration allows both first and second string positioners **54a** and **56a** to be removable and easily re-installed in a locked position in the headstock **48a.** When installed in their respective female positioning slots **50a** and **52a** as shown in FIGS. 4A and 4B, the string positioners **54a** and **56a** position their floss strings **62a** in approximately perpendicular positions, and both floss strings **62a** remain locked in such positions relative the major tool axis **44a.**

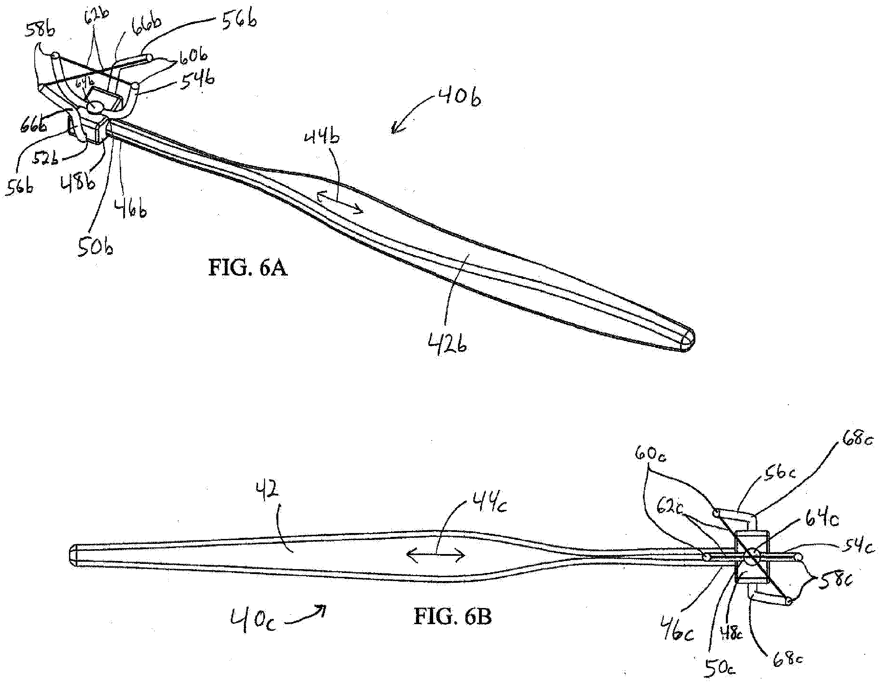

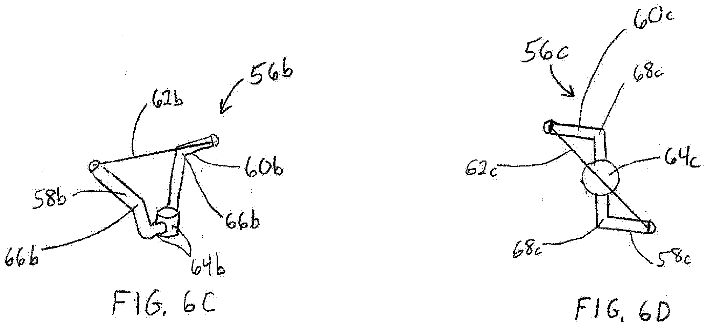

Although the example of FIGS. 3A-5 has been shown and described with first and second string positioners **54a** and **56a** positioning strings **62a** approximately perpendicularly at approximately 90-degree angles from each other, it will be appreciated that the invention contemplates adjustment of the flossing tool **40a by** removal and replacement of the first and/or second string positioners **54a** and/or **56a.** For example, FIG. 6A depicts a perspective view of a flossing tool **40b** similar to the flossing tool **40a** of FIGS. 3A-5, having a first string positioner **54b** and a second string positioner **56b,** the second string positioner **56b** with a first positioner arm **58b** and second positioner arm **60b** each having a clockwise bend **66b.** As best understood by comparing FIG. 6A with its removed first string positioner **54b** depicted in FIG. 6C, the clockwise bends **66b** of the positioner arms **58b** and **60b** result in a clockwise directional twist of the floss string **62b** relative to the major tool axis **44b.** The male keying **64b** of the second string positioner **56b** allows for removable and replaceable locking engagement of the back female positioning slots **52b** in the headstock **48b.** Thus, replacing the second string positioner **56a** of FIGS 3A, 3B, 4, and 5 with the second string positioner **56b** of FIGS. 6A and 6C allows for tool adjustment and repositioning of the floss string **62b** relative to the major tool axis **44b.**

Opposite adjustment can also be achieved from removal and replacement of a second string positioner with opposite bends. For example, FIG. 6B depicts a top view of a flossing tool **40c** similar to the flossing tool **40a** of FIGS. 3A, 3B, 4, and 5 having a second string positioner **56c** with a first positioner arm **58c** and second positioner arm **60c** each having a counterclockwise bend **68c.** As best understood by comparing FIG. 6B with its removed second string positioner **56c** depicted in FIG. 6D, the counterclockwise bends **68c** of the positioner arms **58c** and **60c** result in a counterclockwise directional twist of the floss string **62c** relative to the major tool axis **44c.** The male keying **64c** of the second string positioner **56c** allows for removable and replaceable locking engagement of the back female positioning slots **52c** in the headstock **48c.** Thus, replacing the second string positioner **56a** of FIGS 3A, 3B, 4, and 5 with the second string positioner **56c** of FIGS. 6B and 6D allows for tool adjustment and repositioning of the floss string **62c** relative to the major tool axis **44c.**

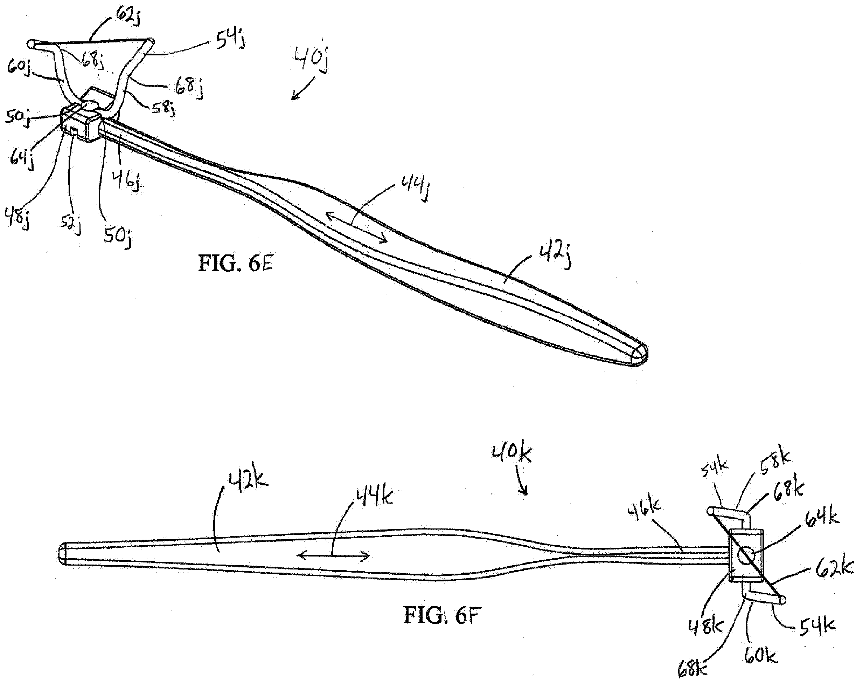

It will be appreciated that examples utilizing a single floss positioner are outside the anticipated scope of the invention. For example, FIG. 6E depicts a flossing tool **40j** having a first string positioner **54j** locked into position by the forward female positioning slot **50j** of the headstock **48j.** The first positioning arm **58j** and second positioning arm **60j** have counterclockwise bends resulting in a counterclockwise directional twist of the floss string **62j** relative to the major tool axis **44j.** A back female positioning **slot 52j** remains unoccupied and open for reorienting or adding additional positioners. For example, **FIG.** 6F, depicts a flossing tool **40k** having a first string positioner **54k** locked into position by the back female positioning slot **52k** of the headstock **48k.** The first positioning arm **58k** and second positioning arm **60k** of the first string positioner **54k** also have counterclockwise bends resulting in a counterclockwise directional twist of the floss string **62k** relative to the major tool axis **44k.** In both FIGS. 6E and 6F, the headstocks **48j** and **48k** allow for tool adjustment by allowing removal or replacement of the first string positioner **54j** or **54k** to reposition a floss string **62j** or **62k** relative the major tool axis **44j** or **44k.**

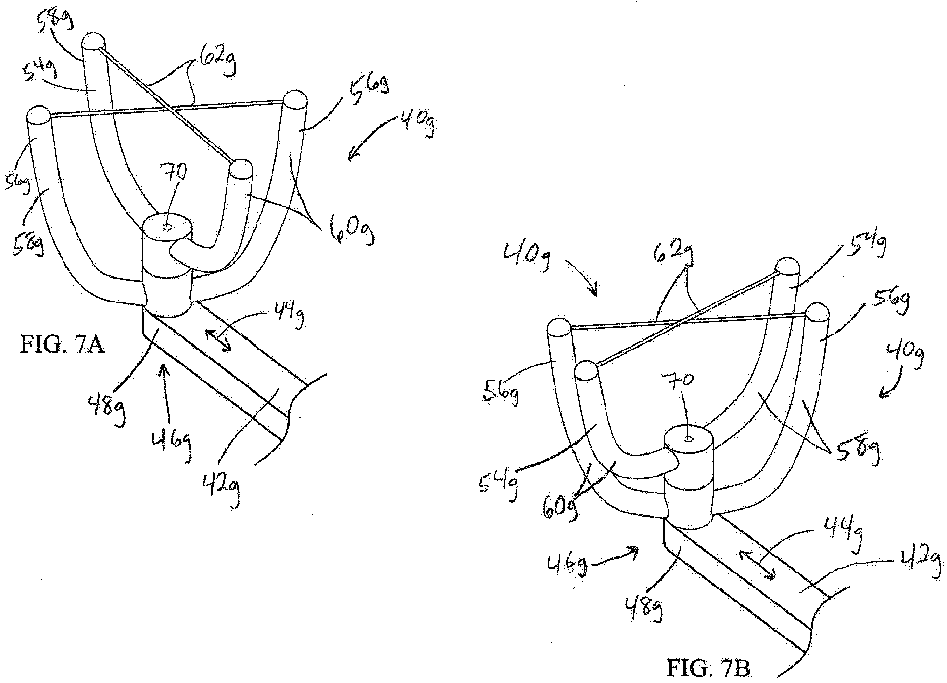

It will be appreciated that adjustment can also occur without removal of tool components. For example, FIGS. 7A and 7B are top perspective views of a flossing tool **40g** of the invention having both a first string positioner **54g** and a second string positioner **56g** positioned at the first distal end **46a** of the tool body or handle **42g.** Both the first string positioner **54g** and second string positioner **56g** are positioned to rotate on a lockable pivot **70** connecting the first and second string positioners **54g** and **56g** to the headstock **48g** of the flossing tool **40g.** This pivot mounting allows either or both of the first and second string positioners **54g** and **56g** to rotate about the pivot **70** for repositioning of the strings **62g** relative to the major tool axis **44g.** The pivot **70** can therefore lock the strings **62g** approximately perpendicularly to each other, as shown in FIG. 7A, or at either closer or greater relative angles to each other, as shown in FIG. 7B. Similarly, both strings **62g** can also be positioned at various positions relative the major tool axis **44g.**

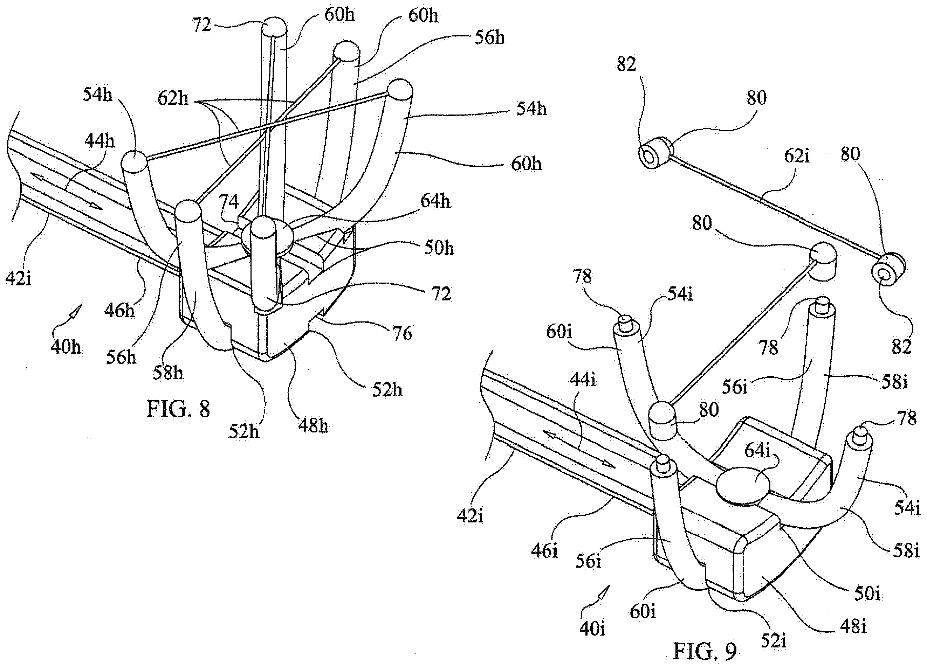

It will be further appreciated that embodiments having more than two strings and/or more than two string positioners are contemplated to be within the anticipated scope of the invention. For example, FIG. 8 depicts a flossing tool **40h** having first and second string positioners **54h** and **56h** each having first and second positioner arms **58h** and **60h** and floss strings **62h.** A third string positioner **72,** having its own first and second positioner arms **58h** and **60h,** is also positioned to occupy and be locked in one of the forward female positioning slots **50h** to suspend a third floss string **62h.** The third floss positioner **72** can be a separate component, independently locked in the headstock **48h** by its occupied female positioning slot **50h,** or it can be joined, attached, or molded into the same structural body as the first string positioner **54h** for added rigidity or simplification in design or manufacturing. An additional unoccupied forward female positioning slot **74** and an additional unoccupied back female positioning slot **76** are included in the headstock **48h** for reorienting or adding additional string positioners.

It is further contemplated that some examples will allow for the removal or replacement of floss strings without full removal or replacement of the string positioners. For example, FIG. 9 depicts a floss tool **40i** of the invention having locking pegs **78** positioned at the ends of each first and second positioning arm **58i** and **60i** of the first and second string positioners **54i** and **56i.** A suspension cap **80** is attached at each end of each floss string **62i** and includes a locking hole **82** to engage, accommodate, and lock a corresponding peg **78i** of the first or second string positioners **54i** and **56i,** thereby locking and positioning each floss string **62i** on the string positioner **54i** or **56i** at a position with respect to the major tool axis **44i.**

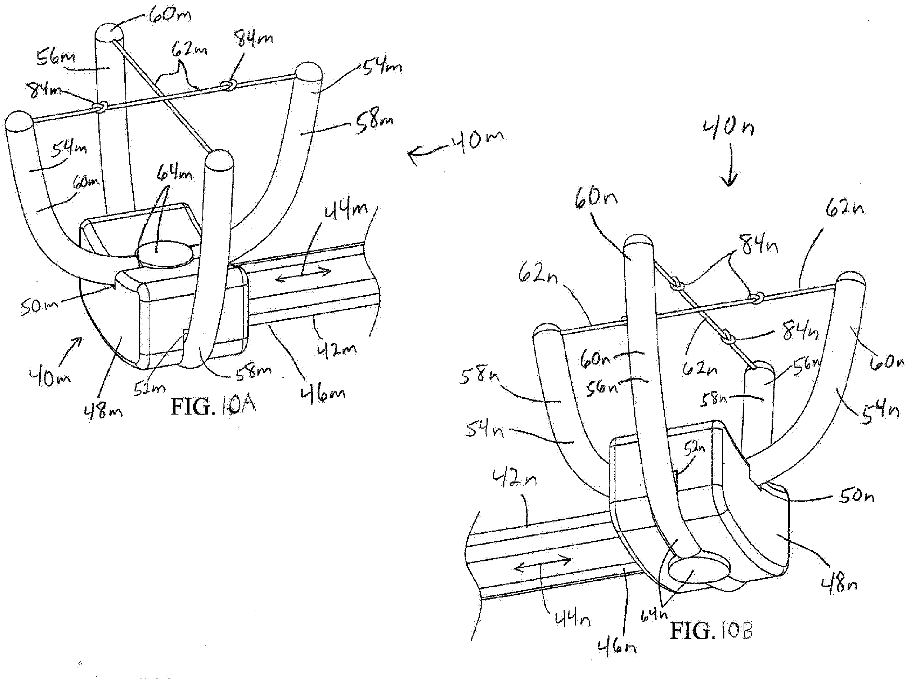

It will be further appreciated that modifications, variations, and functional improvements to the floss strings are anticipated within the contemplated invention scope. For example, braiding, knotting, and variations to string sizes and materials are contemplated. FIGS. 10A depicts a flossing tool **40m** in which the string **62m** extending between the first and second positioner arms **58m** and **60m** of the first string positioner **54m** has two string knots **84m** for enhancing flossing action during use. The string **62m** extending between the first and second positioner arms **58m** and **60m** of the second string positioner **56m** lacks string knots, allowing for a variation in the relative flossing effects between the two floss strings **62m.** In comparison, FIG. 10B depicts a similar flossing tool **40n** in which both the floss strings **62n** of the first and second string positioners **54n** and **56n** include two string knots **84n.** Inclusion of the string knots **84n** on both floss strings **62n** allows for relative flossing effects between the two floss strings **62n** to be more balanced during use.

It will be appreciated that great variations between the numbers of string positioners/strings, arrangements, knot additions, and strings types are within the contemplated scope of the invention. For example, flossing devices of the invention may include single (FIG. 11A), double-90 degree (FIG. 11B), double non-90 degree (FIG. 11C), triple (FIG. 11D), quadruple (FIG. 11E), or a greater number string positioner/string combinations Single mid-point knots may also be a feature of single (FIG. 11F), double-90 degree (FIG. 11G), double non-90 degree (FIG. 11H), triple (FIG. 11-I), quadruple (FIG. 11J), or greater numbered string positioner/string combinations, with midpoint knots joining separate string where two or more strings are present (FIGS. 11G, 11H, 11-I, and 11J}. Braided string materials can also be used in single (FIG. 11K), double-90 degree (FIG. 11L), double non-90 degree (FIG. 11M), triple (FIG. 11N), quadruple (FIG. 11-O), or greater numbered string positioner/string combinations, with the separate strings remaining independent and unattached to different strings where two or more strings are present (FIGS. 11L, 11M, 11N, and 11-O). Multiple string knots may also be added to a single string for single (FIG. 11P), double-90 degree (FIG. 11Q), double non-90 degree (FIG. 11R), triple (FIG. 11S), quadruple (not shown), or a greater numbered string positioner/string combination, including string knots positioned both at the midpoint and at additional locations along a string (FIG. 11T).

It is also possible within the contemplated invention scope to change the positioning of the strings relative the major tool dimension without removing the string positioners. For example FIG. 12A depicts side view of a flossing tool **40p** in which the entire first distal end of the tool **40p** is attached to the rest of the tool body or handle **40p** with an inclination lock pivot **86.** The inclination lock pivot **86** allows for the incline rotation of the entire headstock **48p** and can be locked at any various selected inclined position relative to the major tool axis **44p.** The headstock **48p** therefore allows for tool adjustment by being selectively rotated about and locked by the lock pivot **86** to position the first and second string positioners **54p** and **56p** at different selected inclined positions, positioning the floss strings **62p** relative the major tool axis **44p.**

Other types of floss string positioning relative to the major tool axis are also within the contemplated scope of the invention. For example, FIG. 12B depicts top view of a flossing tool **40q** in which the entire first distal end of the tool **40q** is attached to the rest of the tool body or handle **40q** with a lateral inclination lock pivot **88.** The lateral lock pivot **88** allows for the lateral rotation of the entire headstock **48q** and can be locked at any various selected lateral positions relative to the major tool axis **44q.** The headstock **48q** therefore allows for tool adjustment by being selectively laterally rotated about and locked by the lock pivot **86** to laterally position the first and second string positioners **54q** and **56q** at different selected lateral positions, positioning the floss strings **62q** relative the major tool axis **44q.**

Variations in the number of strings positioned in parallel or on the same string positioner, and variations in the profile and/or orientations of the string positioners themselves are also within the contemplated scope of the invention. For example, FIG. 13 depicts a side view of a flossing tool **40r** of the invention having a single higher profile first string positioner **54r** in which two parallel floss strings **62r** extend between the first and second positioner arms **58r** and **60r** to enhance flossing effectiveness. The first and second positioner arms **58r** and **60r** are themselves longer to allow the first string positioner **54r** to effect flossing with a greater clearance from the headstock **48r** and tool body or handle **42r.** A side view of a similar flossing tool **40s** is depicted in FIG. 14. However, the depicted flossing tool **40s** includes a single lower profile first string positioner **54s** in which the two parallel floss strings **62s** extend between shorter first and second positioner arms **58s** and **60s** to allow the first string positioner **54s** to effect flossing with a less clearance from the headstock **48s** and tool body or handle **42s.**

Variations in profiles and numbers of parallel or same-string positioner strings are also within the contemplated invention scope. For example FIG. 15 depicts a side view of a flossing tool **40t** in which two parallel floss strings **62t** extend between the first and second positioner arms **58t** and **60t** of both first and second higher profile string positioners **54t** and **56t.** The first and second positioner arms **58t** and **60t** of both first and second string positioners **54t** and **56t** are longer to allow greater flossing clearance from the headstock **48t** and tool body or handle **42t** but with the added effectiveness of an additional flossing angle. In some embodiments, intersecting strings **62t** of the first and second string positioners **54t** and **56t** may be attached or interconnected.

Although shown and described as including string positioners or parallel string groups of up to two strings, it will be appreciated that string positioners or more parallel string groups having three or more strings are also intended to be within the contemplated scope of the invention.

It will be similarly appreciated that two or more headstocks and/or pairings or greater combinations of string positioners are possible. For example, FIGS. 17 and 18 depict a side view of a flossing tool **40v** of the invention having multiple headstocks **48v,** each having its own pair of first and second string positioners **54v** and **56v,** positioned along the first distal end **46v** of the tool body or handle **42v.** Among the advantages of such an arrangement is the ability to floss between a user's gums **79** and several teeth **80** simultaneously from either the front, as depicted in FIG. 17, or from either side, as depicted in FIG. 18.

In some embodiments, adjustment of one or more floss strings relative to the major tool axis during tool use may be advantageous, and such embodiments are within the contemplated scope of the invention. For example, FIG. 19 depicts a top perspective view of a flossing tool **40w** of the invention in which the tool body **42w** is divided into a first handle **92** and second handle **94,** the handles **92** and **94** connected at the first distal end **46w** with a pivot link **96.** The pivot link **96** forms a headstock **48w** to which first and second string positioners **54w** and **56w** are attached. A major tool axis **44w** may be defined by the major lengthwise dimension of either the first handle **92** or second handle **94.**

Comparing the top perspective views of the flossing tool **40w** in FIGS. 19 and 20 with the top views of the flossing tool **40w** in FIGS. 21 and 22, the first and second positioning arms **58w** and **60w** are positioned to orient the strings **62w** at approximately 90 degrees, or about perpendicularly from each other, when the handles **92** and **94** are in the closed position, as shown in FIGS. 19 and 21. When the user rotates the handles **92** and **94** away from each other about the pivot link **96,** the first and second string positioners **54w** and **56w** also rotate to a different relative angle, as shown in FIGS. 20 and 22. In this way, the user can adjust the positions of each string **62w** relative to one major tool axis **44w.**

Additional accessory components can also be included as add-on flossing tool features within the anticipated invention scope. For example, FIG. 23 depicts a flossing tool **40x** of the invention fitted with a gum brush **98x** at the first distal end **46x** of the tool body or handle **42x.** The gum brush **98x** is attached to and extends from the headstock **48x** of the flossing tool **40x** generally along the major tool axis **44x.** This positioning enables the user to fully utilize the handle **42x** in manipulating the brush **98x** during gum cleaning. The brush **98x** is optimally screwed into its position on the headstock **48x** to enable removal during flossing operations. An elongated snap cap **100y,** which, as shown, may be constructed of transparent molded plastic, is fitted over the gum brush 98x for hygienic protection during tool storage.

Referring now to FIG. 24, a similar flossing tool 40y of the invention is fitted with a gum brush 98y at the second distal end 99 of the tool body or handle 42y. The gum brush 98y is attached to and extends generally along the major tool axis 44y, which also enables the user to fully utilize the handle 42y in manipulating the brush 98y during gum cleaning, without requiring removal during flossing operations. The elongated snap cap 100y is shown in FIG.24 removed from the brush for use.

Those skilled in the art will realize that this invention is capable of embodiments different from those shown and described. It will be appreciated that the detail of the structure of the disclosed apparatuses and methodologies can be changed in various ways without departing from the invention itself. Accordingly, the drawings and detailed description of the preferred embodiments are to be regarded as including such equivalents as do not depart from the scope of the invention as set out in the appended claims.

## Claims

1. An adjustable flossing tool (40g) comprising:
a tool body (42g) having a longitudinal tool axis (44g), said tool body (42g) having a distal tool end (46g) and a headstock (48g) positioned at or near said distal tool end (46g);
a first string positioner (54g) and a second string positioner (56g) positioned on said flossing tool (40g), each said first string positioner (54g) and said second string positioner (56g) having a first positioner arm (58g) and a second positioner arm (60g), both said first string positioner (54g) and said second string positioner (56g) being positioned on said headstock (48g);
each of said first string positioner (54g) and said second string positioner (56g) having at least one first floss string (62g) positioned to extend from said first positioner arm (58g) to said second positioner arm (60g);
said headstock (48g) allowing at least one of said first string positioner (54g) and said second string positioner (56g) to position a said floss string (62g) at a first string position in parallel to or at an angle to said longitudinal tool axis (44g), said headstock (48g) allowing for tool adjustment to allow at least one of said first string positioner (54g) and said at least one second string positioner (56g) to position a said floss string (62g) at a second string position in parallel to or at an angle to said longitudinal tool axis (44g); and
said first string position being different from said second string position relative to said longitudinal tool axis (44g), further comprising a rotatable locking pivot (70g), said locking pivot (70g) attaching both said first string positioner (54g) and said second string positioner (56g) to said headstock (48g), said locking pivot (70g) allowing at least one of said first string positioner (54g) and said second string positioner (56g) to rotate and position at least one of said floss strings (62g) in said first string position, said locking pivot (70g) allowing for tool adjustment by allowing at least one of said first string positioner (54g) and said second string positioner (56g) to rotate and position at least one of said floss strings (62g) in said second string position.

2. The adjustable flossing tool (40g) of claim 1, further comprising at least one of said first string positioner (54g) and said second string positioner (56g) being removable and replaceable to a locked angle relative to said longitudinal tool axis (44g) by said headstock (48g).

3. The adjustable flossing tool (40t, 40u) of claim 1, further comprising a second floss string (62t, 62u) on at least one of said first string positioner (54t, 54u) and said second string positioner (56t, 56u), said second floss string (62t, 62u) being positioned parallel to at least one first floss string (62t, 62u).

4. The adjustable flossing tool (40t, 40u) of claim 3, further comprising said first string positioner (54t, 54u) and said second string positioner (56t, 56u) each having at least one second floss string (62t, 62u), each said at least one second floss string (62t, 62u) being positioned parallel to each said first floss string (62t, 62u).

5. The adjustable flossing tool (40g) of claim 1, further comprising said first string positioner (54g) and said second string positioner (54g) allowing said floss string (62g) to be positioned approximately perpendicularly to each other.

6. The adjustable flossing tool (40m, 40n) of claim 1, further comprising a knot (84m, 84n) in at least one of said first floss string (62m, 62n) and said second floss string (62m, 62n).

7. The adjustable flossing tool (40g) of claim 1, wherein at least one of said floss strings (62g) is braided.

8. The adjustable flossing tool (40p, 40q) of claim 1, further comprising a pivot joint (86, 88) in said tool body (42p, 42q), said headstock (48p, 48q) being rotatable relative to said longitudinal tool axis (44p, 44q), said pivot joint (86, 88) allowing said headstock (48p, 48q) and at least one of said first string positioner (54p, 54q) and said second string positioner (56p, 56q) to rotate at least one said floss string (62p, 62q) from said first string position to said second string position.

9. The adjustable flossing tool (40p) of claim 8, wherein said pivot joint is an inclination lock pivot (86) which allows for incline rotation of said headstock (48p).

10. The adjustable flossing tool (40q) of claim 8, wherein said pivot joint is a lateral lock pivot (88) which allows for lateral rotation of said headstock (48q).

11. The adjustable flossing tool (40x) of claim 1, further comprising a gum brush (98x) at the distal end (46x) of the tool body (42x).

12. The adjustable flossing tool (40y) of claim 1, further comprising a proximal tool end (99) and a gum brush (98y) positioned on said proximal tool end (99).

13. The adjustable flossing tool (40h) of claim 1, further comprising three or more said string positioners (54h, 56h, 72) and three or more floss strings (62h).

14. The adjustable flossing tool (40g) of claim 1, wherein said first string positioner (54g) and said second string positioner (56g) are positioned to allow said adjustable flossing tool (40g) to simultaneously floss multiple teeth.

15. The adjustable flossing tool (40i) of claim 1, wherein a least one of said floss strings (62i) is attached to at least one first positioner arm (58i) and a least one second positioner arm (60i) with interchangeable string positioner caps (80).

## Patentansprüche

1. Anpassbares Zahnseidewerkzeug (40g), umfassend:
einen Werkzeug-Hauptteil (42g) mit einer longitudinalen Werkzeugachse (44g), wobei der Werkzeug-Hauptteil (42g) ein distales Werkzeugende (46g) und einen Kopfteil (48g) aufweist, der an oder nahe dem Werkzeugende (46g) angeordnet ist;
einen ersten Fadenpositionierer (54g) und einen zweiten Fadenpositionierer (56g), die an dem Zahnseidewerkzeug (40g) angeordnet sind, wobei der erste Fadenpositionierer (54g) und der zweite Fadenpositionierer (56g) jeder einen ersten Positionierarm (58g) und einen zweiten Positionierarm (60g) aufweisen, wobei sowohl der erste Fadenpositionierer (54g) als auch der zweite Fadenpositionierer (56g) an dem Kopfteil (48g) angeordnet sind;
wobei der erste Fadenpositionierer (54g) und der zweite Fadenpositionierer (56g) jeder wenigstens einen ersten Zahnseidefaden (62g) aufweisen, der derart angeordnet ist, dass er sich vom ersten Positionierarm (58g) zum zweiten Positionierarm (60g) erstreckt;
wobei das Kopfteil (48g) dem ersten Fadenpositionierer (54g) und/oder dem zweiten Fadenpositionierer (56g) gestattet, den Zahnseidefaden (62g) in einer ersten Fadenposition parallel oder in einem Winkel zu der longitudinalen Werkzeugachse (44g) anzuordnen, wobei das Kopfteil (48g) eine Anpassung gestattet, um es dem ersten Fadenpositionierer (54g) und/oder dem zweiten Fadenpositionierer (56g) zu gestatten, den Zahnseidefaden (62g) in einer zweiten Fadenposition parallel oder in einem Winkel zu der longitudinalen Werkzeugachse (44g) anzuordnen; und
wobei die erste Fadenposition von der zweiten Fadenposition bezogen auf die longitudinale Werkzeugachse (44g) verschieden ist, ferner umfassend einen drehbaren Einrast-Drehpunkt (70g), wobei der Einrast-Drehpunkt (70g) sowohl den ersten Fadenpositionierer (54g) als auch den zweiten Fadenpositioner (56g) an dem Kopfteil (48g) anbringt, wobei der Einrast-Drehpunkt (70g) dem ersten Fadenpositionierer (54g) und/oder dem zweiten Fadenpositionierer (56g) gestattet, zu rotieren und wenigstens einen der Zahnseidefäden (62g) in der ersten Fadenposition anzuordnen, wobei der Einrast-Drehpunkt (70g) eine Werkzeug-Anpassung derart gestattet, dass der erste Fadenpositionierer (54g) und/oder der zweite Fadenpositionierer (56g) rotieren und wenigstens einen der Zahnseidefäden (62g) in der zweiten Fadenposition anordnen.

2. Anpassbares Zahnseidewerkzeug (40g) nach Anspruch 1, ferner umfassend, dass der erste Fadenpositionierer (54g) und der zweite Fadenpositionierer (56g) entfernbar und austauschbar sind, und zwar in einem eingerasteten Winkel bezogen auf die longitudinale Werkzeugachse (44g), mittels des Kopfteils (48g).

3. Anpassbares Zahnseidewerkzeug (40t, 40u) nach Anspruch 1, ferner umfassend einen zweiten Zahnseidefaden (62t, 62u) an dem ersten Fadenpositionierer (54t, 54u) und/oder dem zweiten Fadenpositionierer (56t, 56u), wobei der zweite Zahnseidefaden (62t, 62u) parallel zu wenigstens einem ersten Zahnseidefaden (62t, 62u) angeordnet ist.

4. Anpassbares Zahnseidewerkzeug (40t, 40u) nach Anspruch 3, ferner umfassend, dass der erste Fadenpositionierer (54t, 54u) und der zweite Fadenpositionierer (56t, 56u) jeder wenigstens einen zweiten Zahnseidefaden (62t, 62u) aufweisen, wobei jeder der zweiten Zahnseidefäden (62t, 62u) parallel zu jedem der ersten Zahnseidefäden (62t, 62u) angeordnet ist.

5. Anpassbares Zahnseidewerkzeug (40g) nach Anspruch 1, ferner umfassend, dass der erste Fadenpositionierer (54g) und der zweite Fadenpositionierer (54g) es dem Zahnseidefaden (62g) gestatten, annähernd senkrecht zueinander angeordnet zu werden.

6. Anpassbares Zahnseidewerkzeug (40m, 40n) nach Anspruch 1, ferner umfassend einen Knoten (84m, 84n) in dem ersten Zahnseidefaden (62m, 62n) und/oder dem zweiten Zahnseidefaden (62m, 62n).

7. Anpassbares Zahnseidewerkzeug (40g) nach Anspruch 1, wobei wenigstens einer der Zahnseidefäden (62g) geflochten ist.

8. Anpassbares Zahnseidewerkzeug (40p, 40q) nach Anspruch 1, ferner umfassend ein Drehgelenk (86, 88) in dem Werkzeug-Hauptteil (42p, 42q), wobei der Kopfteil (48p, 48q) bezogen auf die longitudinale Werkzeugachse (44p, 44q) drehbar ist, wobei es das Drehgelenk (86, 88) dem Kopfteil (48p, 48q) und dem ersten Fadenpositionierer (54p, 54q) und/oder dem zweiten Fadenpositionierer (56p, 56q) gestattet, den wenigstens einen Zahnseidefaden (62p, 62q) von der ersten Fadenposition zu der zweiten Fadenposition zu drehen.

9. Anpassbares Zahnseidewerkzeug (40p) nach Anspruch 8, wobei das Drehgelenk ein geneigter Einrast-Drehpunkt (86) ist, der geneigte Rotation des Kopfteils (48p) gestattet.

10. Anpassbares Zahnseidewerkzeug (40q) nach Anspruch 8, wobei das Drehgelenk ein lateraler Einrast-Drehpunkt (88) ist, der laterale Rotation des Kopfteils (48q) gestattet.

11. Anpassbares Zahnseidewerkzeug (40x) nach Anspruch 1, ferner umfassend eine Zahnfleischbürste (98x) am distalen Ende (46x) des Werkzeug-Hauptteils(42x).

12. Anpassbares Zahnseidewerkzeug (40y) nach Anspruch 1, ferner umfassend ein proximales Werkzeugende (99) und eine an dem proximalen Werkzeugende (99) angebrachte Zahnfleischbürste (98y).

13. Anpassbares Zahnseidewerkzeug (40h) nach Anspruch 1, ferner umfassend drei oder mehr von den Fadenpositionierern (54h, 56h, 72) und drei oder mehr Zahnseidefäden (62h).

14. Anpassbares Zahnseidewerkzeug (40g) nach Anspruch 1, wobei der erste Fadenpositionierer (54g) und der zweite Fadenpositionierer (56g) derart angeordnet sind, dass sie gestatten, dass das anpassbare Zahnseidewerkzeug (40g) gleichzeitig mehrere Zähne bestreicht.

15. Anpassbares Zahnseidewerkzeug (40i) nach Anspruch 1, wobei wenigstens einer der Zahnseidefäden (62i) mit austauschbaren Fadenpositionierer-Kappen (80) an wenigstens einem ersten Positionierarm (58i) und wenigstens einem zweiten Positionierarm (60i) angebracht ist.

## Revendications

1. Outil d'utilisation de fil dentaire réglable (40g) comprenant :
un corps d'outil (42g) présentant un axe d'outil longitudinal (44g), ledit corps d'outil (42g) présentant une extrémité d'outil distale (46g) et une tête (48g) positionnée au niveau ou à proximité de ladite extrémité d'outil distale (46g) ;
un premier positionneur de fil (54g) et un second positionneur de fil (56g) positionnés sur ledit outil d'utilisation de fil dentaire (40g), chacun dudit premier positionneur de fil (54g) et dudit second positionneur de fil (56g) présentant un premier bras de positionneur (58g) et un second bras de positionneur (60g), ledit premier positionneur de fil (54g) et ledit second positionneur de fil (56g) étant tous deux positionnés sur ladite tête (48g) ;
chacun dudit premier positionneur de fil (54g) et dudit second positionneur de fil (56g) présentant au moins un premier fil de fil dentaire (62g) positionné pour s'étendre dudit premier bras de positionneur (58g) vers ledit second bras de positionneur (60g) ;
ladite tête (48g) permettant à au moins l'un dudit premier positionneur de fil (54g) et dudit second positionneur de fil (56g) de positionner ledit fil de fil dentaire (62g) au niveau d'une première position de fil en parallèle ou incliné par rapport audit axe d'outil longitudinal (44g), ladite tête (48g) permettant le réglage de l'outil en permettant à au moins l'un dudit premier positionneur de fil (54g) et dudit au moins un second positionneur de fil (56g) de positionner ledit fil de fil dentaire (62g) au niveau d'une seconde position de fil en parallèle ou incliné par rapport audit axe d'outil longitudinal (44g) ; et
ladite première position de fil est différente de ladite seconde position de fil par rapport à l'axe d'outil longitudinal (44g), comprenant en outre un pivot de verrouillage rotatif (70g), ledit pivot de verrouillage (70g) fixant à la fois ledit premier positionneur de fil (54g) et ledit second positionneur de fil (56g) au niveau de ladite tête (48g), ledit pivot de verrouillage (70g) permettant à au moins l'un dudit premier positionneur de fil (54g) et dudit second positionneur de fil (56g) de faire tourner et de positionner au moins l'un desdits fils de fil dentaire (62g) dans ladite première position de fil, ledit pivot de verrouillage (70g) permettant le réglage de l'outil en permettant à au moins l'un dudit premier positionneur de fil (54g) et
dudit second positionneur de fil (56g) de faire tourner et positionner au moins un desdits fils de fil dentaire (62g) dans ladite seconde position de fil.

2. Outil d'utilisation de fil dentaire réglable (40g) selon la revendication 1, comprenant en outre au moins l'un dudit premier positionneur de fil (54g) et dudit second positionneur de fil (56g) amovible et remplaçable à un angle verrouillé par rapport à l'axe d'outil longitudinal (44g) par ladite tête (48g).

3. Outil d'utilisation de fil dentaire réglable (40t, 40u) selon la revendication 1, comprenant en outre un second fil de fil dentaire (62t, 62u) sur au moins l'un dudit premier positionneur de fil (54t, 54u) et dudit second positionneur de fil (56t, 56u), ledit second fil de fil dentaire (62t, 62u) étant positionné parallèlement à au moins un premier fil de fil dentaire (62t, 62u).

4. Outil d'utilisation de fil dentaire réglable (40t, 40u) selon la revendication 3, comprenant en outre ledit premier positionneur de fil (54t, 54u) et ledit second positionneur de fil (56t, 56u) présentant chacun au moins un second fil de fil dentaire (62t, 62u), chacun dudit au moins un second fil de fil dentaire (62t, 62u) étant positionné parallèlement à chacun dudit premier fil de fil dentaire (62t, 62u).

5. Outil d'utilisation de fil dentaire réglable (40g) selon la revendication 1, comprenant en outre ledit premier positionneur de fil (54g) et ledit second positionneur de fil (54g) permettant au fil dentaire (62g) d'être positionné approximativement perpendiculairement l'un par rapport à l'autre.

6. Outil d'utilisation de fil dentaire réglable (40m, 40n) selon la revendication 1, comprenant en outre un nœud (84m, 84n) dans au moins l'un dudit premier fil de fil dentaire (62m, 62n) et dudit second fil de fil dentaire (62m, 62n).

7. Outil d'utilisation de fil dentaire réglable (40g) selon la revendication 1, dans lequel au moins l'un desdits fils de fil dentaire (62g) est tressé.

8. Outil d'utilisation de fil dentaire réglable (40p, 40q) selon la revendication 1, comprenant en outre une articulation pivot (86, 88) dans ledit corps d'outil (42p, 42q), ladite tête (48p, 48q) étant rotative par rapport à l'axe d'outil longitudinal (44p, 44q), ladite articulation pivot (86, 88) permettant à ladite tête (48p, 48q) et à au moins l'un dudit premier positionneur de fil (54p, 54q) et dudit second positionneur de fil (56p, 56q) de faire tourner au moins l'un dudit fil de fil dentaire (62p, 62q) de ladite première position de fil à ladite seconde position de fil.

9. Outil d'utilisation de fil dentaire réglable (40p) selon la revendication 8, dans lequel ladite articulation pivot est un pivot de verrouillage d'inclinaison (86) qui permet une rotation inclinée de ladite tête (48p).

10. Outil d'utilisation de fil dentaire réglable (40q) selon la revendication 8, dans lequel ladite articulation pivot est un pivot de verrouillage latéral (88) qui permet une rotation latérale de ladite tête (48q).

11. Outil d'utilisation de fil dentaire réglable (40x) selon la revendication 1, comprenant en outre une brosse à gencives (98x) à l'extrémité distale (46x) du corps d'outil (42x).

12. Outil d'utilisation de fil dentaire réglable (40y) selon la revendication 1, comprenant en outre une extrémité d'outil proximale (99) et une brosse à gencives (98y) positionnée sur ladite extrémité d'outil proximale (99).

13. Outil d'utilisation de fil dentaire réglable (40h) selon la revendication 1, comprenant en outre trois positionneurs de fil (54h, 56h, 72) ou plus et trois fils de fil dentaire (62h) ou plus.

14. Outil d'utilisation de fil dentaire réglable (40g) selon la revendication 1, dans lequel ledit premier positionneur de fil (54g) et ledit second positionneur de fil (56g) sont positionnés pour permettre audit outil d'utilisation de fil dentaire réglable (40g) de passer simultanément le fil dentaire sur plusieurs dents.

15. Outil d'utilisation de fil dentaire réglable (40i) selon la revendication 1, dans lequel au moins l'un desdits fils de fil dentaire (62i) est fixé à au moins un premier bras de positionneur (58i) et à au moins un second bras de positionneur (60i) avec des capuchons de positionneur de fil interchangeables (80).
